Europäisches Patentamt

European Patent Office

Office européen des brevets

(11) Veröffentlichungsnummer: **0 367 910**
**A2**

## (12) EUROPÄISCHE PATENTANMELDUNG

(21) Anmeldenummer: **89113931.3**

(22) Anmeldetag: **28.07.89**

(51) Int. Cl.5: **G02B 6/255**

(30) Priorität: **10.11.88 DE 3838075**

(43) Veröffentlichungstag der Anmeldung:
**16.05.90 Patentblatt 90/20**

(84) Benannte Vertragsstaaten:
**FR GB IT SE**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Wurmser, Ulrich
Ellmösl 6
D-8183 Rottach-Egern(DE)**
Erfinder: **Meyer, Josef
Rosenheimerstrasse 15
D-8011 Grosshelfendorf(DE)**

(54) **Schutzvorrichtung für eine Faserleiterverbindung.**

(57) Bei einer Schutzvorrichtung mit einer Schlauchhülle (4) um eine leitende Verbindung zweier optischer Faserleiter (1, 2) , deren Fasern (Leiter 1.2
bzw. 2.2) jeweils an der Verbindungsstelle (3) von
einem Schutzüberzug (1.1 bzw. 2.1) befreit sind, ist
eine zumindest zugbelastbare Verbindung der beiden Schutzüberzüge (1.1, 2.1) mittels einer in überlappter Anordnung an ihre Enden durch Schrumpfung der Schlauchhülle (4) gepreßten Füllung derselben wenigstens aus die Verbindungsstelle (3) überbrückenden hochzugfesten Faserfäden (5) vorgesehen.

FIG. 1

## Schutzvorrichtung für eine Faserleiterverbindung

Die Erfindung betrifft eine Schutzvorrichtung für eine Faserleiterverbindung gemäß dem Oberbgriff des Patentansrpuchs 1.

Zum Schutz der blanken Verbindungsstellen zwischen optischen Faserleitern beispielsweise von Lichtwellenleiterspulen, elektrooptischen Bauteilen u. dgl. werden jene üblicherweise in einer Kunstharz-Vergußmasse eingebettet oder einfach mit einer Schlauchhülle überzogen. In beiden Fällen besteht keine Sicherung der Leiterverbindung gegen Reißschäden (sog. Aufspleißen) infolge Temperaturschwankungen, womit insbesondere bei der raumfahrttechnischen Anwendung zu rechnen ist.

Der Erfindung liegt folglich die Aufgabe zugrunde, bei einer Schutzvorrichtung der eingangs genannten Art die leitende Verbindung der Faserleiter gegen Reißschäden zu sichern.

Diese Aufgabe ist mit den kennzeichnenden Merkmalen des Patentanspruchs 1 gelöst. Die Schutzvorrichtung gemäß der Erfindung erschöpft sich demnach nicht in einer Zugentlastung der Leiterfasern durch eine zugbelastbare Verbindung der Schutzüberzüge der Faserleiter an der Verbindungsstelle mittels Faserfäden , sondern macht hiervon in einem solchen Verbund mit der Schlauchhülle Gebrauch daß diese den für die Funktion der Faserfäden erforderlichen Kraftschluß mit den Schutzüberzügen der Faserleiter zwangsläufig sicherstellt. Hierbei läßt sich die Verbindungssicherheit zwischen diesen Faserfäden und den Schutzüberzügen durch die im Anspruch 2 gekennzeichnete Maßnahme einfach steigern, weil sich dann mit der (thermischen) Schrumpfung der Schlauchhülle zwangsläufig noch eine Klebstoffmatrix der Faserfäden ausbilden kann. Schließlich besteht durch die im Anspruch 4 gekennzeichnete Maßnahme zusätzlich die Möglichkeit, die Leiterfaserverbindung gegen Knicken zu sichern. Alternativ oder ergänzend läßt sich durch die Maßnahme gemäß Anspruch 5 der Knickwiderstand erhöhen. Schließlich wird die Maßnahme gemäß Anspruch 3 wegen der hohen Zugfestigkeit der Aramidfaser auch bei höheren Temperaturen bzw. starken Temperaturschwankungen bevorzugt.

Nachfolgend wird die Erfindung anhand eines Ausführungsbeispieles weiter erläutert. Hierbei zeigt die Zeichnung in

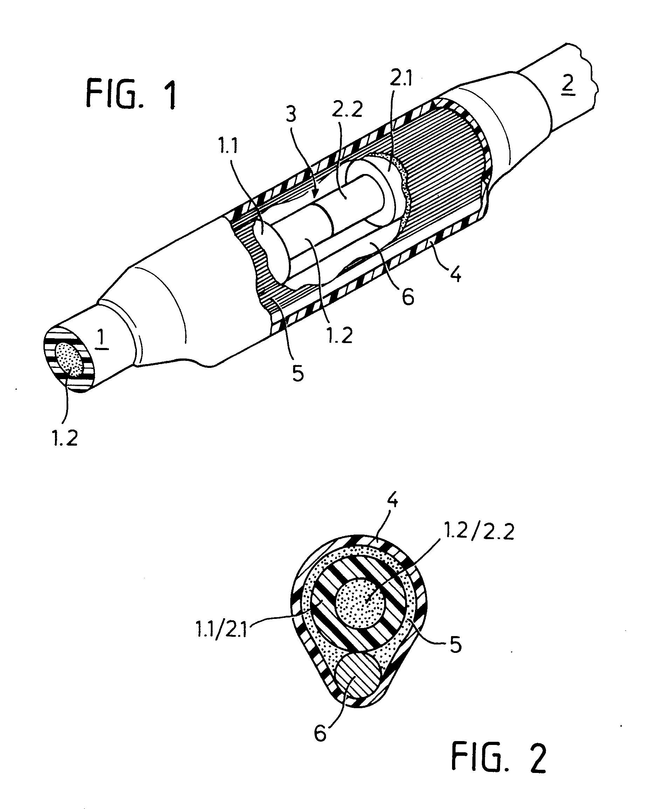

Fig. 1 eine teilweise aufgebrochene , perspektivische Darstellung einer Schutzvorrichtung für eine Faserleiterverbindung

Fig. 2 einen Querschnitt durch die Schutzvorrichtung gemäß Fig. 1.

Zwei optische Faserleiter 1, 2 , z.B. Glasfaserleiter, sind jeweils mit einem Schutzüberzug 1.1 bzw. 2.1 aus einem Kunststoff o. dgl. versehen, welcher an einer Verbindungsstelle 3 ihrer Leiter 1.2 bzw. 2.2 entfernt ist, um deren leitende Verbindung z.B. durch einen Schweißvorgang herstellen zu können. Zur Zugentlastung dieser leitenden Verbindung der Leiter 1.2, 2.2 ist eine (nichtleitende) zugbelastbare Verbindung zwischen den beiden Schutzüberzügen 1.1 bzw. 2.1 vorgesehen. Dazu wird eine (zweckmäßig vor der Herstellung der Leiterfaserverbindung auf einen der Faserleiter 1,2 geschobene) Schlauchhülle 4 aus einem schrumpfbaren Material, z.B. einem thermoplastischem Kuststoff (wie PTFE) , mit solchem Spiel um beide Schutzüberzüge 1.1, 2.1 angeordnet, daß dazwischen Aramid- o. dgl. Faserfäden 5 einfügbar sind. Wie die Schlauchhülle 4 überbrücken auch diese Faserfäden 5 die Verbindungsstelle 3 der Leiter 1.2, 2.2 in überlappter Anordnung mit den Schutzüberzügen 1.1 bzw. 2.1, so daß die Schlauchhülle 4 wie dargestellt, bloß durch Wärme bis zur Anpressung der Faserfäden 5 an die Schutzüberzüge 1.1, 2.1 geschrumpft zu werden braucht, um die gewünschte zugbelastbare Verbindung derselben zu bewirken. Dabei wird durch vorausgehendes Hinzufügen eines Metalldrahtes 6, z.B. aus Stahl, noch eine Knicksicherung der Leiterfaserverbindung erreicht. Zu diesem Zweck kann selbstverständlich auch der freie Hohlraum an der Verbindungsstelle 3 mit einer (nicht dargestellen) durch die Schlauchhülle 4 hindurch injizierten thermoplastischen Kunststoffmasse ausgefüllt werden.

Schließlich braucht bei der beschriebenen Schutzvorrichtung die Schlauchhülle 4 innenseitig nur mit einem Klebstoff beschichtet zu sein, um zwecks Steigerung der Verbindungssicherheit bei deren Schrumpfung die Faserfäden 5 zwangsläufig in einer entsprechenden Bindemittelmatrix einzubetten.

**Ansprüche**

1. Schutzvorrichtung mit einer Schlauchhülle um eine leitende Verbindung zweier optischer Faserleiter, deren Fasern jeweils an der Verbindungsstelle von einem Schutzüberzug befreit sind, **gekennzeichnet** durch eine zumindest zugbelastbare Verbindung der beiden Schutzüberzüge (1.1, 2.1) mittels einer in überlappter Anordnung an ihre Enden durch Schrumpfung der Schlauchhülle (4) gepreßten Füllung derselben wenigstens aus die Verbindungsstelle (3) überbrückenden hochzugfesten Faserfäden (5).

2. Schutzvorrichtung nach Anspruch 1, **dadurch gekennzeichnet,** daß die Schlauchhülle (4) ein innenseitig klebstoffbeschichteter, thermoplastischer Kunststoffschlauch ist.

3. Schutzvorrichtung nach Anspruch 1, **gekennzeichnet** durch Aramidfaserfäden (5) als Füllung.

4. Schutzvorrichtung nach Anspruch 1 oder 3 , **dadurch gekennzeichnet,** daß den Faserfäden (5) ein Metalldraht (6) hinzugefügt ist.

5. Schutzvorrichtung nach Anspruch 1, **dadurch gekennzeichnet,** daß der Hohlraum zwischen der Füllung der Schlauchhülle (4) und der Verbindungsstelle (3) mit einer thermoplastischen Kunststoffmasse ausgefüllt ist.

FIG. 1

FIG. 2